# EUROPÄISCHE PATENTANMELDUNG

(11) **EP 1 058 022 A2**
(43) Veröffentlichungstag der Anmeldung: **06.12.2000**
(21) Anmeldenummer: 00106597.8
(22) Anmeldetag: 28.03.2000
(51) Int. Cl.: F16D 65/12

(54) **Bremsscheibe aus Faserverbund-Werkstoff**

(30) Priorität: 31.05.1999 DE 19925003
(71) Anmelder: Dr.Ing. h.c.F. Porsche Aktiengesellschaft, 70435 Stuttgart (DE)
(72) Erfinder: Martin, Roland, 71287 Weissach (DE)

(57) **Zusammenfassung**

Die Erfindung betrifft eine Bremsscheibe aus Faserverbund-Werkstoff, bestehend aus zwei zusammengesetzten Reibringen, wobei die Reibringe innenseits mit Rippen versehen sind und die beiden Reibringe über wenigstens einen Teil der Rippen gegeneinander abgestützt sind. Um eine geeignete Formgebung von Stirnflächen der Rippen zu schaffen wird vorgeschlagen, als Koppelflächen verwendete Stirnflächen so auszubilden, daß eine Koppelung der Reibringe in genau einer Drehrichtung bewirkt ist und dabei die Koppelflächen wechselweise anzuordnen.

## Beschreibung

Die Erfindung betrifft eine Bremsscheibe aus Faserverbund-Werkstoff nach dem Oberbegriff des Patentanspruches 1.

Aus der DE 44 45 226 A1 ist bereits eine Bremsscheibe für Scheibenbremsen bekannt geworden, die aus einem Werkstoff der Gruppe der Kohlenstoffe besteht. Gemäß einer Ausbildung ist es vorgesehen, die Bremsscheibe hälftig so herzustellen, daß jeweils an einem Reibring radiale Rippen angeformt sind. Eine Verbindung der Reibringe soll dann über entsprechend ausgebildete Stirnflächen der Rippen erfolgen.

Gegenüber diesem Stand der Technik ist es Aufgabe der Erfindung, eine geeignete Formgebung solcher Stirnflächen zu schaffen.

Erfindungsgemäß wird diese Aufgabe mit den Merkmalen des Patentanspruches 1 gelöst. Es wird vorgeschlagen, als Koppelflächen verwendete Stirnflächen so auszubilden, daß eine Koppelung der Reibringe in genau einer Drehrichtung bewirkt ist und dabei die Koppelflächen wechselweise anzuordnen. Die Koppelung der Reibringe in genau einer Drehrichtung bedeutet in diesem Zusammenhang, daß - zusätzlich zur axialen Abstützung - die Rippen beispielsweise nur bei einer Rechtsdrehung des einen Reibringes gegenüber dem anderen Reibring miteinander verbunden sind, während die Rippen bei einer Linksdrehung sich voneinander losen wurden. Dadurch, daß die Koppelflächen an den Rippen wechselweise angeordnet sind, sind die beiden Reibringe in beiden Richtungen miteinander gekoppelt. Der besondere Vorteil bei dieser Anordnung liegt darin, daß nur in einer Drehrichtung wirkende Koppelflächen besonders einfach herzustellen sind; insbesondere ist es bei den verwendeten Werkstoffen möglich, solche Koppelflächen bereits im Formprozeß der Reibringe ohne weitere Nachbearbeitung herzustellen. Die Koppelflächen können vorzugsweise als schräge, ebene Flächen oder als einseitig gestufte Flächen ausgebildet sein.

Vorteilhafte Weiterbildungen der Erfindung sind in den Unteransprüchen vorgesehen.

So wird vorgeschlagen, zusätzlich zu den Koppelflächen Stutzflächen ohne Koppelung der Reibringe in Drehrichtung vorzusehen. Da bei den Stützflächen, die vorzugsweise eben ausgeführt sein können, nur ein einziges Fertigungsmaß, nämlich die Höhe, von wesentlicher Bedeutung ist, gestaltet sich ihre Herstellung in einem Formprozeß oder Bearbeitungsprozeß deutlich einfacher als die Herstellung von Koppelflächen. Die Anzahl der Koppelflächen kann damit auf das zur Übertragung eines Drehmomentes von dem einen Reibring auf den anderen Reibring notwendige Maß reduziert werden.

Während die schrägen Flächen einfacher herzustellen, weisen die gestuften Flächen den Vorteil auf, daß hier in axialer Richtung eingeleitete Kräfte, wie sie durch die Bremsbeläge erzeugt werden, keine Reaktionskräfte in Umfangsrichtung hervorrufen. In Verbindung mit einem Formprozeß könnte es darüber hinaus von Vorteil sein, die Koppelflächen als schräge, wellenförmige Flächen auszubilden. Derartige Flächen eignen sich gut für einen Formprozeß, da sie keine schaden Kanten aufweisen. Gleichzeitig kann ihr Profil so gestaltet sein, daß auch Kräfte in axialer Richtung übertragen werden, ohne daß Reaktionskräfte in Umfangsrichtung erzeugt werden.

Die vorgenannte Ausbildung der Koppelflächen eignen sich sowohl für radial, tangential, wie auch für evolventenförmig gekrümmt angeordnete Rippen. Darüber hinaus können zusätzlich zu Rippen mit Koppelflächen und Rippen mit Stützflächen auch Halbrippen vorgesehen sein, die jeweils an der Innenseite der Reibringe einander gegenüberstehend angeordnet sind. Diese Halbrippen schaffen in den durch die Rippen mit Koppelflächen und Stützflächen zwischen den Reibringen gebildeten Kühlkanälen zusätzliche Oberfläche zur Verbesserung des Wärmeüberganges von der Bremsscheibe an die sie durchströmende Kühlluft.

Zur weiteren Verbesserung des Naßbremsverhaltens und des Wärmeüberganges an die Kühlluft können schließlich in den Reibringen Bohrungen vorgesehen sein, die vorzugsweise bereits im Zuge des Formprozesses der Reibringe eingebracht werden.

Zur Herstellung der Bremsscheibe ist eine Fixierung der beiden Reibringe in axialer Richtung ausreichend, da die Reibringe durch die Ausbildung der Koppelflächen unter Wirkung der bei einem Bremsvorgang eingebrachten Spannkräfte in Drehrichtung miteinander gekoppelt sind. Es ist lediglich dafür Sorge zu tragen, daß die beim Bremsvorgang entstehenden Drehmomente über einen oder beide Reibringe auf einem Bremstopf oder ähnliches übertragen werden.

Die Erfindung ist nachstehend anhand der in den Figuren dargestellten Ausführungsbeispiele näher erläutert.

Es zeigen:

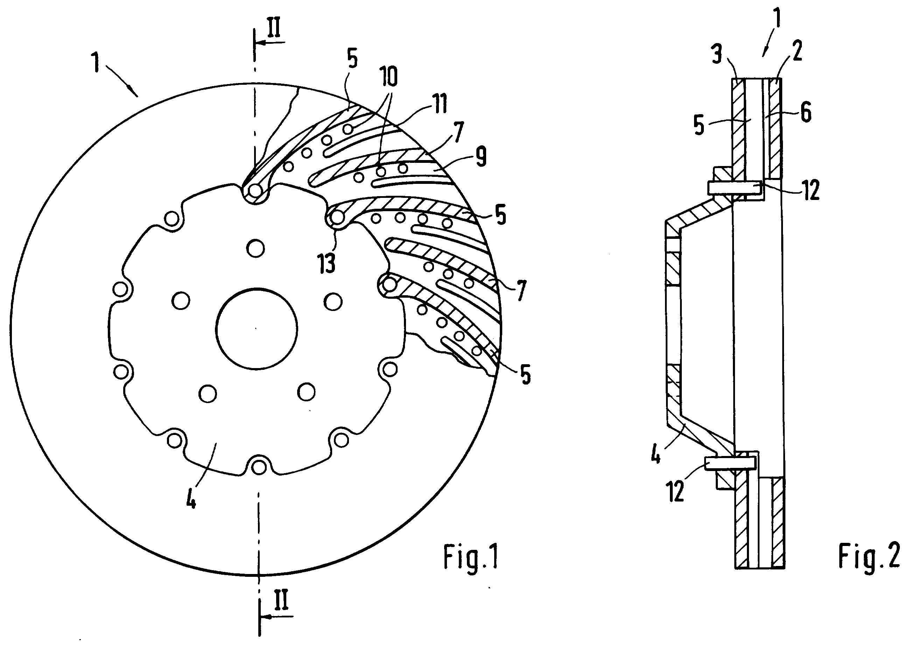

- Fig. 1: eine Draufsicht auf eine Bremsscheibe,
- Fig. 2: einen Schnitt nach der Linie II-II der Fig. 1, durch die Bremsscheibe,
- Fig. 3: eine schematische Darstellung einer Abwicklung des äußeren Umfanges der Bremsscheibe nach einem ersten Ausführungsbeispiel,
- Fig. 4: eine Darstellung nach Fig. 3 nach einem zweiten Ausführungsbeispiel,
- Fig. 5: eine Darstellung nach Fig. 3 nach einem dritten Ausführungsbeispiel,
- Fig. 6: eine erste alternative Ausrichtung der Rippen und
- Fig. 7: eine zweite alternative Ausrichtung der Rippen.

Eine innenbelüftete Bremsscheibe 1 aus einem Faserverbund-Werkstoff, hier auf Kohlenstoff-Basis, umfaßt im wesentlichen zwei Reibringe 2 und 3 sowie einen Topf 4. Die Reibringe 2, 3 weisen jeweils Rippen 5, 7 und 6, 8 auf, die miteinander in Kontakt stehen. Zwischen Rippen 5 bis 8 sind Luftkanäle 9 zur Kühlung der Bremsscheibe 1 gebildet. In den Reibringen 2, 3 können durchgehende Bohrungen 10 in verschiedenen Anordnungen vorgesehen sein. Darüber hinaus können Halbrippen 11 zwischen den Rippen 5 bis 8 angeordnet sein, die sich in den Luftkanälen 6 einander gegenüberstehen, ohne sich zu berühren.

Die Herstellung der Reibringe 2 und 3 erfolgt jeweils in einem Formprozeß ohne Nachbearbeitung. Der Topf 4 kann in beliebiger Weise, beispielsweise aus einem metallischen Werkstoff, hergestellt werden. Der Reibringe 3 sowie der Topf 4 sind durch Verbindungselemente 12, wie Schrauben, Nieten oder ähnliches zur Übertragung eines Drehmomentes verbunden. Hierbei greifen die Verbindungselemente 12 in Augen 13 ein, die endseits der Rippen 5 gebildet sind. Es ist zusätzlich möglich, auch endseits der Rippen 6 des vom Topf 4 entfernt angeordneten Reibringes 2 derartige Augen 13 vorzusehen, und den Topf 4 mit beiden Reibringen 2, 3 zu verbinden.

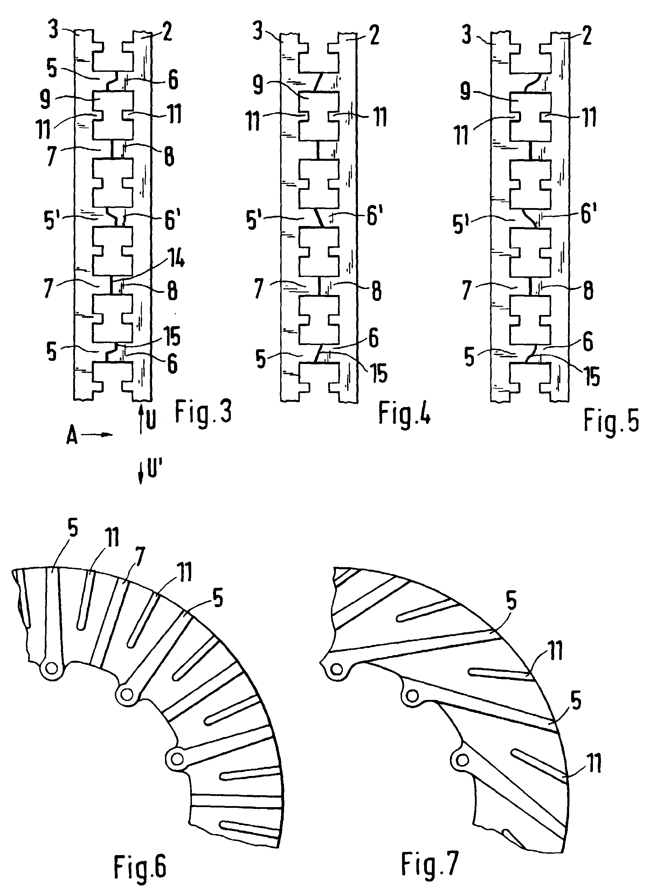

Fig. 3 zeigt in einer schematische Darstellung einer Abwicklung des äußeren Umfanges der Bremsscheibe 1 die Ausbildung der Rippen 5 bis 8. Die Rippen 7, 8 sind als Stützrippen ausgebildet und weisen Stirnflachen 14 auf, die parallel zu einer Umfangsrichtung U verlaufen. Die Stirnflächen 14 können dann nur Kräfte in axialer Richtung A betragen.

Die als Koppelrippen ausgebildeten Rippen 5, 6 weisen demgegenüber als Koppelflächen ausgebildete Stirnflächen 15 auf, die eine Koppelung der Reibringe 2, 3 sowohl in axialer Richtung A wie auch in Umfangsrichtung U bewirken. (Hierzu wird in Fig. 3 davon ausgegangen, daß der linke Reibring 3 feststeht, während der rechte Reibring 2 in Umfangsrichtung U bewegt werden soll.) Ein weiteres Paar von Koppelrippen 5', 6' ist so angeordnet, daß eine Koppelung in der entgegengesetzten Umfangsrichtung U' erfolgt. Die Koppelrippen 5, 6, die in der Umfangsrichtung U wirksam sind, und die Koppelrippen 5', 6', die in der entgegengesetzten Umfangsrichtung U' wirksam sind, sind wechselweise angeordnet. Zwischen den Koppelrippen 5, 6, 5', 6' können jeweils eine oder mehrere Stützrippen 7, 8 angeordnet sein.

Die Koppelfläche 15 ist im ersten Ausführungsbeispiel nach Fig. 3 in Form einer Stufe ausgebildet. Hierbei ist es für den Formprozeß von Vorteil, wenn die Koppelfläche 15 nicht parallel zur axialen Richtung A, die auch der Entformrichtung beim Formprozeß entspricht, zu liegen kommt. Daher ist in der Koppelfläche 15 kein rechter Winkel gebildet, sondern zwei parallel zu den Reibringen 2, 3 angeordnete Abschnitte sind über eine schräge Fläche miteinander verbunden.

Fig. 4 zeigt eine alternative Ausbildung der Koppelfläche 15 als schräge, ebene Fläche.

Wie in Fig. 5 dargestellt, kann nach einer weiteren Alternative die Koppelfläche 15 auch wellenförmig, hier annähernd S-förmig ausgebildet sein.

Alternativ zu evolventenförmig gekrümmten Anordnung der Rippen 5, 6, 7, 8,11 können diese wie in Fig. 6 dargestellt auch radial bzw. wie in Fig. 7 dargestell, tangential angeordnet sein.

Da Reibringe 2, 3 aus einem faserverstärktem Carbon-Siliziumkarbid-Werkstoff (C/C-SiC-Werkstoff) im Endzustand sehr schwer zu bearbeiten sind, werden die Koppelflächen 15, die Stützflächen 14 und ggf. die Bohrungen 10 bereits bei der Herstellung eines Formkörpers aus kohlenstoffaserverstärkten Kohlenstoff, dem sog. Grünlinge, eingebracht. Dies kann vorzugsweise im Rahmen des Formprozesses geschehen, aber eine mechanische Bearbeitung ist selbstverständlich auch möglich. Der Formkörper wird anschließend in einem zweiten Schritt mit flüssigem Silizium infiltriert und in einem dritten Schritt einer Wärmbehandlung unterworfen, wobei das Silizium sich mit Kohlenstoff zu SiC umwandelt. Da diese Schritte die äußere Form der Reibringe 2, 3 nicht mehr ändern, müssen die Koppelflächen 15 und die Stützflachen 14 (sowie ggf. die Bohrungen 10) nicht nachbearbeitet werden.

## Patentansprüche

1. Bremsscheibe aus Faserverbund-Werkstoff, bestehend aus zwei zusammengesetzten Reibringen (2, 3), wobei die Reibringe innenseits mit Rippen (5, 6, 7, 8) versehen sind und die beiden Reibringe über wenigstens einen Teil der Rippen gegeneinander abgestützt sind, **dadurch gekennzeichnet,** daß eine Teil der zur Abstützung verwendeten Rippen stirnseitig korrespondierende Koppelflächen (15) aufweisen, die eine Kopplung der Reibringe in genau einer Drehrichtung bewirken, wobei die Koppelflächen wechselweise angeordnet sind.

2. Bremsscheibe nach Anspruch 1, **dadurch gekennnzeichnet,** daß die Koppelflächen (15) schräge, ebene Flächen sind.

3. Bremsscheibe nach Anspruch 1, **dadurch gekennnzeichnet,** daß die Koppelflächen (15) einseitig gestufte Flächen sind.

4. Bremsscheibe nach Anspruch 3, **dadurch gekennnzeichnet,** daß zusätzlich Stützflächen (14) ohne Kopplung der Reibringe (2, 3) in Drehrichtung vorgesehen sind.

5. Bremsscheibe nach einem der Ansprüche 1 bis 4, **dadurch gekennzeichnet,** daß die Koppelflächen (15) und die Stützflächen (15) durch einen Formprozeß ohne Nachbearbeitung hergestellt sind.

6. Bremsscheibe nach einem der Ansprüche 1 bis 5, **dadurch gekennzeichnet,** daß die Rippen (5, 6, 7, 8) radial angeordnet sind.

7. Bremsscheibe nach einem der Ansprüche 1 bis 5, **dadurch gekennzeichnet,** daß die Rippen (5, 6, 7, 8) tangential angeordnet sind.

8. Bremsscheibe nach einem der Ansprüche 1 bis 5, **dadurch gekennzeichnet,** daß die Rippen (5, 6, 7, 8) evolventenförmig gekrümmt angeordnet sind.

9. Bremsscheibe nach einem der vorstehenden Ansprüche, **dadurch gekennzeichnet,** daß zusätzlich Halbrippen (11) an der Innenseite der Reibringe (2, 3) vorgesehen sind.

10. Bremsscheibe nach einem der vorstehenden Ansprüche, **dadurch gekennzeichnet,** daß zusätzlich Bohrungen (10) in den Reibringe vorgesehen sind.

11. Bremsscheibe nach Anspruch 10, **dadurch gekennnzeichnet,** daß die Bohrungen (10) durch einen Formprozeß ohne Nachbearbeitung hergestellt sind.
